# FASCICULE DE BREVET EUROPEEN

(11) **EP 0 727 689 B1**
(45) Date de publication et mention de la délivrance du brevet: **29.09.2004**
(21) Numéro de dépôt: 96400302.4
(22) Date de dépôt: 14.02.1996
(51) Int. Cl.: G02F 1/125

(54) **Composant acousto-optique à onde optique guidée**
Akusto-optisches Wellenleiterbauelement
Acoustooptical waveguide component

(30) Priorité: 17.02.1995 FR 9501855
(43) Date de publication de la demande: 21.08.1996
(73) Titulaire: FRANCE TELECOM, 75015 Paris (FR)
(72) Inventeur: Sapriel, Jacques, 92120 Montrouge (FR)
(74) Mandataire: Le Forestier, Eric

(56) Documents cités:
- NTZ NACHRICHTENTECHNISCHE ZEITSCHRIFT, vol. 47, no. 11, 1994, BERLIN DE, pages 792-793-796-798, XP002003322 H.HEIDRICH: "OEIC AUF INDIUMPHOSPHID"
- ULTRASONICS, vol. 31, no. 5, 1993, GUILDFORD GB, pages 327-332, XP002003323 P.RENOSI: "ACOUSTO-OPTICS OF SEMICONDUCTOR CRYSTALS..."
- JOURNAL OF CRYSTAL GROWTH, vol. 96, 1989, AMSTERDAM. NL, pages 785-789, XP002003324 C.T.LEE: "DEPENDENCE OF ZNO FILMS ON SPUTTERING PARAMETERS ANS SAW DEVICES ON ZNO/InP"
- APPLIED OPTICS., vol. 31, no. 25, Septembre 1992, NEW YORK US, pages 5246-5254, XP002003325 T.Q.VU & AL: "INTEGRATION OF A CURVED HYBRID WAVEGUIDE LENS ..."
- SOVIET JOURNAL OF QUANTUM ELECTRONICS., vol. 17, no. 10, Octobre 1987, NEW YORK US, pages 1321-1323, XP002003326 S.M.KIKKARIN & AL: "FREQUENCY DEPENDENCE OF THE ACOUSTOOPTIC.."
- JAPANESE JOURNAL OF APPLIED PHYSICS, vol. 22, no. 3, Mars 1983, TOKYO JP, pages 441-445, XP002003327 N.SUZUKI & AL: "ELASTOOPTIC PROPERTIES OF InP."

## Description

La présente invention est relative aux composants acousto-optiques.

De façon générale, les techniques acousto-optiques mettent en oeuvre des ultrasons pour influencer des faisceaux optiques.

. Les phénomènes acousto-optiques sont désormais classiquement connus. Pour une approche générale de l'acousto-optique, on pourra avantageusement se référer aux deux ouvrages suivants :
. J. SAPRIEL - "L'acousto-optique" - Masson - 1976, et
. C.S. TSAI - "Guided-Wave Acousto-Optics" - Springer-Verlag - 1990.

En particulier, les ultrasons peuvent être utilisés pour modifier l'intensité d'un faisceau lumineux, voir couper celui-ci (fonctionnement en modulateur ou interrupteur), modifier sa direction (déflecteur, commutateur), sélectionner une de ses longueurs d'onde (filtres ou analyseur), changer sa fréquence (translateur), etc,.

Deux techniques distinctes sont principalement utilisées en acousto-optique : l'acousto-optique de volume et l'acousto-optique guidée.

L'acousto-optique de volume met en oeuvre des matériaux massifs, tels que LiNbO₃, TeO₂, PbMoO₄, GaP, dans lesquels les faisceaux acoustiques et optiques se propagent de façon libre.

Dans l'acousto-optique guidée, les ondes optiques se propagent dans des guides d'onde. Ces guides d'onde optiques sont généralement réalisés en LiNbO₃ ou GaAs et servent de milieu d'interaction acousto-optique.

Le document T.Q. VU et al. - « Integration of curved hybrid waveguide lens and photodetector array in a GaAs waveguide » (APPLIED OPTICS, vol.31, no 25, 1 septembre 1992) décrit par exemple une lentille de Fresnel formée dans une couche de guide d'onde GaAs par gravure ionique et un réseau photodétecteur formés par croissance épitaxiale d'une couche InGaAs puis gravure ionique.

Toutefois, les composants acousto-optiques à ondes guidées connus à ce jour ne sont pas pleinement satisfaisants.

En particulier, ils ne sont pas susceptibles d'intégration monolithique avec d'autres composants actifs et passifs (lasers, détecteurs, modulateurs, etc.).

C'est notamment le cas pour les composants à base de LiNbO₃. C'est également le cas pour les modules à base de GaAs comme milieu d'interaction, l'émission ou la détection laser (à partir de GaA1As comme couche active par exemple) ne pouvant être obtenue aux longueurs d'onde où GaAs fonctionne en temps que guide d'onde.

En outre, dans le cas des modules acousto-optiques à onde optique guidée, l'interaction acousto-optique est faible. Notamment, les guides d'onde en LiNbO₃ présentent un faible facteur de mérite acousto-optique dans le proche infrarouge.

L'invention propose quant à elle une structure de composant qui se prête à l'intégration sur un même substrat de la fonction acousto-optique en onde guidée et d'autres fonctions classiques telles que l'émission et la détection.

Egalement, le composant proposé par l'invention présente une zone d'interaction acousto-optique fonctionnant dans des conditions de résonance, qui confère à ce composant des performances exceptionnelles.

L'acousto-optique de résonance a fait l'objet de nombreuses études en acousto-optique de volume.

On pourra à cet égard avantageusement se référer aux différentes publications suivantes :
- demande de brevet français publiée sous le numéro 2 684 194 au nom de J. SAPRIEL ;
- P.RENOSI - J. SAPRIEL - "Near-resonance acousto-optical interactions in GaAs and InP" - Applied Physics Letters - 64, 2794 - 1994, et
- P. RENOSI - J. SAPRIEL - "Acousto-optics of semiconductor crystals and superlattices in resonance conditions" - Ultrasonics - 31, 32'7 - 1993.

La publication « Acousto-optics of semiconductor crystals and superlattices in resonance condition » décrit un composant acousto-optique volumique comprenant un réseau superposé de couches formé par croissance épitaxiale sur un substrat.

Les phénomènes de résonance acousto-optique sont notamment observés dans le cas des matériaux massifs du type à bande interdite directe, pour des longueurs d'onde de faisceau optique correspondant à des énergies de photons proches du saut d'énergie de la bande interdite. Dans ces conditions, l'indice de réfraction n du matériau et surtout ses coefficients photoélastiques p sont augmentés. Les facteurs de mérite acousto-optique d'un matériau variant en n^{α} (α étant compris entre 6 et 8) et p², l'interaction acousto-optique se trouve alors

Par ailleurs, la publication H. HEIDRICH - « OEIC auf Indiumphosphid: Schlüsselbauelemente für zukünftige photonische Netze » (NTZ, vol.47, no 11, 1994) décrit l'utilisation d'une technique de dépôt par épitaxie sélective pour la réalisation de composants optiques intégrant monolithiquement plusieurs fonctions.

Toutefois, il convient de noter que la résonance acousto-optique n'a jamais été mise en oeuvre à ce jour dans le cas des composants acousto-optiques à onde optique guidée. Les milieux permettant d'obtenir une résonance acousto-optique sont en effet généralement opaques à la transmission et ne peuvent donc être utilisés comme guides d'onde.

L'invention propose un composant acousto-optique à onde optique guidée, selon la revendication 1.

On notera que cette structure s'écarte de celle des composants acousto-optiques à onde guidée de l'art antérieur connu, dans lesquels les guides d'onde étaient utilisés comme milieux d'interaction acousto-optique. Par ailleurs, dans la structure qui vient d'être définie, l'indice de réfraction de la zone d'interaction pour les photons utilisés est nécessairement tel que la lumière y est confinée.

La structure selon l'invention confère au composant selon l'invention une grande efficacité d'interaction acousto-optique, de sorte que ce composant permet, par rapport aux composants de l'art antérieur, une plus grande intensité lumineuse diffractée pour une même puissance électrique de fonctionnement, ainsi qu'un plus grand nombre de directions de commutation.

D'autres caractéristiques et avantages ressortiront encore de la description qui suit. Cette description est purement illustrative et non limitative. Elle doit être lue en regard de la figure unique annexée sur laquelle on a représenté en vue en perspective un composant conforme à un mode de réalisation possible pour l'invention.

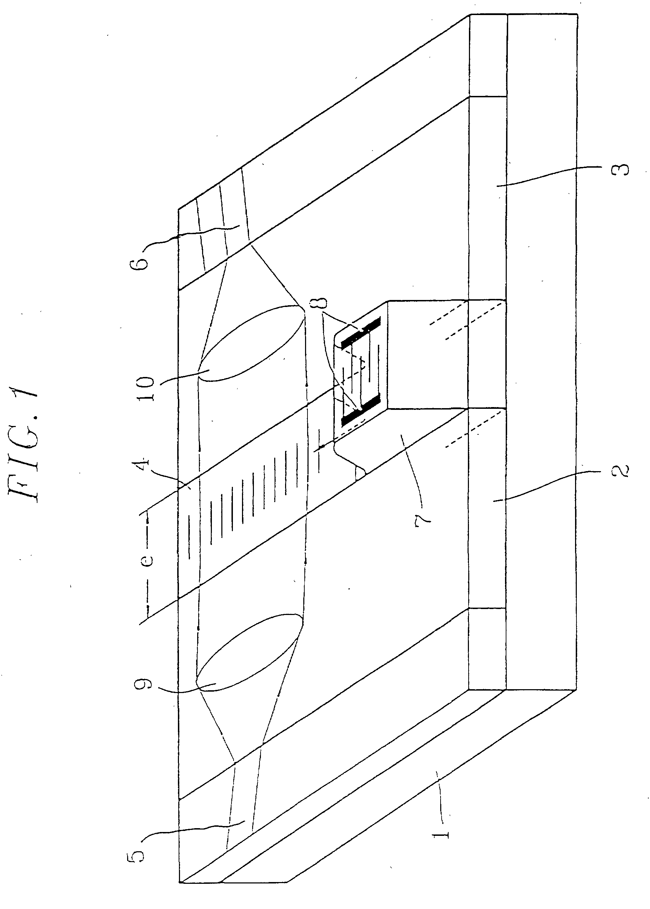

Le composant représenté sur la figure 1 est plus particulièrement adapté à la commutation optique. Il comporte un substrat 1 sur lequel sont déposées des couches minces épitaxiées dont l'épaisseur et la composition sont choisies de façon à définir sur ledit substrat pluseurs zones, référencées de 2 à 6, correspondant à des fonctions différentes.

La zone 4 est la zone d'interaction acousto-optique. Les zones 2 et 3 de part et d'autre de la zone 4 sont des guides d'onde planaires. Les zones 5 et 6 définissent des barrettes de canaux d'entrée et de sortie respectivement en amont de la zone 2 et aval et de la zone 3.

Ces différentes zones sont avantageusement réalisées par croissance épitaxiale sélective sur le substrat 1.

Les matériaux des différentes couches épitaxiées sont avantageusement des matériaux de la famille GaInAsP, le substrat 1 étant par exemple un substrat d'InP. Ces composés sont choisis de même paramètre de maille qu'InP. Ils présentent des longueurs d'onde de bande interdite comprises entre 0,92 et 1,7 µm (cet intervalle pouvant être encore étendu dans le cas de structures contraintes). Ils se prêtent à une croissance par épitaxie sélective et localisée sur InP, ainsi qu'à l'intégration sur un même substrat d'une grande variété de fonctions. Leur indice de réfraction est supérieur à celui d'InP, ce qui leur confère leurs propriétés de couches guidantes de la lumière.

Les technologies de croissance épitaxiale sélective sont classiquement connues de l'Homme du Métier. On pourra à cet égard avantageusement se référer à la publication suivante :
" Selective growth of InP/GaInAs in LP-MOVPE and MOMBE/CBE"-O. Kayser-Journal of Crystal Growth 107 (1991) - p.989-998 - North Holland.

Les valeurs des indices x et y des composés Ga₁₋ₓ InₓAs_{y}P_{1-y}, ainsi que les épaisseurs de ces composés, sont variées localement de façon à réaliser les différentes fonctions souhaitées.

En particulier, la composition de la zone d'interaction acousto-optique 4 est choisie de façon que le saut d'énergie de bande interdites du matériau de ladite zone 4 soit légèrement supérieur à l'énergie des photons de la source lumineuse. La zone d'interaction acousto-optique fonctionne ainsi dans des conditions dites de proche résonance.

Avec une telle structure, les facteurs de mérite de la zone acousto-optique 4 sont environ multipliés par 10 par rapport à ceux des zones 2 et 3 formant guide d'onde.

La dimension e de la zone 4 d'interaction acousto-optique dans la direction de propagation de la lumière est choisie courte, de façon à éliminer l'absorption optique résiduelle de la queue d'Urbach (absorption résiduelle qui se trouve dans une région dont l'étendue en énergie est d'environ 100 mev en dessous du gap de la zone 4).

Cette dimension e est par exemple avantageusement choisie entre 20 et 500 µm selon que l'énergie des photons est plus ou moins rapprochée du gap de la zone 4.

La zone 4 porte d'un côté du composant un plot 7 en un matériau piézo-électrique, tel que ZnO, excité par un transducteur du type comportant deux électrodes 8, formant un peigne interdigité large bande, réalisées par dépôt métallique.

Pour la réalisation de telles électrodes, on pourra avantageusement se référer à :
"Acoustic Waves - Devices, Imaging and analog signal processing" - Gordon S. KINO - Prentice Hall - Signal Processing Series - Alan V. Opppenheim - Series Editor - 1987.

Ces électrodes 8 sont reliées à un générateur haute fréquence (non représenté) qui excite les électrodes 12 pour la génération des ultrasons (f₀ = 750 MHz ; Δf = 500 MHz). Le signal électrique RF (radiofréquence) appliqué aux électrodes 8 module le signal lumineux de la façon suivante :
- la fréquence de ce signal RF modifie la direction du faisceau lumineux monochromatique ;
- la puissance RF change l'intensité du faisceau optique déviée de 0 à 100 % ;
- la fréquence optique est translatée d'une valeur égale à la fréquence RF.

La vitesse des ondes acoustiques est de 3000 m/s environ.

En variante, le transducteur peut être réalisé entre le plot 7 de ZnO et la couche d'interaction acoustooptique de la zone 4.

Egalement, plusieurs modules de génération d'ultrasons peuvent être prévus sur une même zone 4.

Des lentilles convergentes 9 et 10 sont avantageusement disposées respectivement dans les zones formant guide optique 2 et 3. Ces lentilles sont par exemple réalisées par les techniques d'usinage ionique classiquement connues de l'Homme du Métier.

On pourra à cet égard se référer par exemple aux publications :
- T.Q. Vu, J.A. Norris, and C.S. Tsai
   Planar waveguide lenses in GaAs by using ion milling
   Appl. Phys. Lett. 54 (12), 1989 p. 1098 ;
- T.Q. Vu, C.S. Tsai, and Y.C. Kao
   Integration of a curved hybrid waveguide lens and photodetector array in a GaAs waveguide
   Applied Optics, 31 (25) - 1992 p. 5246.

La ou les lentilles 9 de collimation ont leur foyer situé à la sortie des canaux de la zone d'entrée 5. Elles permettent d'agrandir les faisceaux lumineux et de les rendre parallèles avant qu'ils n'atteignent la zone d'interaction 4.

Les lentilles 10 focalisent les faisceaux en sortie de la zone d'interaction 4 sur les canaux de la zone de sortie 6.

On notera que les canaux de la zone 6 de sortie sont éventuellement plus espacés que les canaux de la zone 5 d'entrée, de façon à éviter tout couplage entre les différentes sorties possibles. Avantageusement, notamment, ils sont espacés d'une distance égale à deux fois leur largeur.

La structure selon l'invention peut être intégrée monolithiquement avec un (ou plusieurs) laser(s) (non représenté(s)), relié(s) par exemple au canal (ou aux canaux) de la zone d'entrée 5. Un tel laser est par exemple un laser enterré émettant à une longueur d'onde de 1,3 µm ou 1,5 µm. La structure selon l'invention peut notamment intégrer plusieurs lasers de longueurs d'onde différentes. Ces longueurs d'onde sont alors choisies relativement proches (Δλ/λ de l'ordre de 2 à 3 %).

La composition de la zone active 4 est alors choisie de façon que l'absorption optique soit comprise entre 10 et 300 cm⁻¹ (énergies de photons incidents proches du saut d'énergie de la bande interdite de la zone 4, typiquement dans une gamme de 50 meV au-dessous).

Pour l'intégration monolithique de lasers, on pourra avantageusement se référer aux mublications suivantes :
- Semiconductor Lasers for Coherent Optical Fiber Communications
   T.L. KOCH and U. KOREN
   J. of Lightwave Technology, U8U 53), 1990, p. 274 ;
- Extremely low threshold Operation of 1.5 µm GaInASP/InP buried ridge stripe lasers
   J. Charil, S. Slempkes, D. Robein, C. Kazmierski and J.C. Bouley Electron. Lett. 25 (22), 1989 p. 1479.

Le composant selon l'invention peut bien entendu intégrer encore d'autres fonctions, et en particulier intégrer des photodétecteurs. Des amplificateurs optiques peuvent également être intégrés par exemple dans les canaux des zones 5 et 6.

Pour l'intégration de photodétecteur InGaAs, on se référera avantageusement à :
- InGaAs photodétectors; T.P. Pearsall. "Properties of lattice matched and strained InGaAs" - Inspec, London 1993 p. 267.

De façon plus générale, pour l'intégration sur des substrats InP, on pourra se référer aux publications :
- Semiconductor Photonic Integrated Circuits
   T.L. KOCH and U. KOREN
   IEEE, J. of Quantum E 27 (3), 1991, p. 641. ;
- InP in Integrated Opto-Electronics par S.W. BLAND dans "Properties of InP" Inspec, London - 1991, p. 467.

Un exemple de réalisation va maintenant être détaillé pour une longueur d'onde de fonctionnement de 1,55 µm.

La zone active 4 acousto-optique est en :
In_{0,63} Ga_{0,36} As_{0,78} P_{0,22}
tandis que les couches transparentes des zones 2 et 3 formant guide d'onde sont en :
In_{0,73} Ga_{0,27} As_{0,6} P_{0,4}.

La largeur e de la zone 4 est de 500 µm.

Les zones 2 et 3 sont chacune de 1 mm. Les canaux d'entrée et de sortie ont une largeur de 5 µm.

Les lentilles convergentes 9 et 10 sont à une distance de 10 mm des zones d'entrée ou de sortie 5 et 6.

Leur distance focale est de 10 mm et leur ouverture de 3 mm.

Le substrat 1 est de 500 µm d'épaisseur.

L'épaisseur des couches constituant les différentes zones 2 à 6 est de 0,8 µm de manière à ce qu'un seul mode puisse se propager (mode fondamental d'indice 0).

Le plot 7 de Zn0 a une épaisseur de 3 µm.

Avec le composant qui vient d'être décrit, le nombre de positions de commutation possibles pourrait être, selon les critères de Rayleigh, d'environ 500 avec un temps de commutation de l'ordre de la µs. Une dizaine de mW acoustiques seulement sont nécessaires pour défléchir 100% de la lumière. Toutefois, ce nombre de 500 est théorique. Il est réduit en réalité à 250 positions nettement séparées lorsque l'on tient compte de l'espacement des 250 canaux de sortie et des aberration des deux lentilles.

Dans le montage qui est illustré sur la figure, la transition optique est de 1 vers N (1 source, N accès). Si on considère le montage de la figure 1 en sens inverse, on peut constituer la fonction N vers 1. Les canaux de sortie deviennent alors des sources de même longueur d'onde ou de longueurs d'onde voisines qui toutes font focaliser sur le même canal de sortie.

Pour une perte de conversion électromécanique maximum de 20 dB, la puissance de fonctionnement de ce dispositif acousto-optique est au maximum à 1 W électrique.

Comme on l'aura compris, le composant acousto-optique proposé est un composant de hautes performances particulièrement adapté aux télécommunications optiques (1,3 à 1,7 µm). Il présente l'avantage de pouvoir être intégré monolithiquement avec d'autres fonctions.

Bien entendu, d'autres matériaux que ceux de la famille GaInAspP peuvent également convenir. Notamment, comme matériau III-V, on pourra également envisager les matériaux de la famille GaInAlAs sur substrat InP.

Pour un fonctionnement à 1,55 µm, des compositions possibles de matériaux GaInAlAs sont, à l'accord de maille sur un substrat d'InP :
In_{0,53}Ga_{0,27}Al_{0,2}As
pour les zones formant guide transparent et
In_{0,53}Ga_{0,37}Al_{0,1}As
pour les zones d'interaction acousto-optiques.

On pourra également avantageusement utiliser des matériaux II-VI, par exemple des matériaux de la famille HgCdTe à l'accord de maille sur substrat CdZnTe ou Si.

Par exemple, pour un fonctionnement à 1,55 µm :
le substrat peut être de type :
   Cd₁₋ₓ₁Znₓ₁Te,
avec x1 de l'ordre de 4 %,
les guides pouvant être en Hg₁₋ₓ₂Cdₓ₂Te avec x2 de l'ordre de 10 %,
la zone d'interaction acousto-optique étant en Hg₁₋ₓ₃Cdₓ₃Te, avec x3 de l'ordre de 68 %.

## Revendications

1. Composant acousto-optique à onde optique guidée comportant sur un même substrat (1) :
- au moins une couche (2, 3) de guide d'onde optique transparente à une longueur d'onde de fonctionnement du composant,
- une couche (4) définissant sur ledit substrat (1) une zone d'interaction acousto-optique, la composition de ladite couche étant choisie de façon que l'absorption optique , à la longueur d'onde de fonctionnement, soit comprise entre 10 et 300 cm⁻¹,
lesdites couches (2, 3, 4) étant coplanaires et agencées sur le substrat de sorte que l'onde optique soit guidée dans le plan des couches (2, 3, 4),
lesdites couches (2, 3, 4) étant déposées sur une zone de ce substrat par épitaxie sélective.

2. Composant selon la revendication 1, **caractérisé en ce que** le substrat est un substrat d'InP et **en ce que** les différentes couches (2-6) sont des composés Ga₁₋ₓInₓAs_{y}P_{1-y}, dont les valeurs de x et y et/ou les épaisseurs sont choisies de façon à conférer à ces différentes zones les propriétés correspondantes à leur fonction respective tout en étant en accord de maille sur le substrat.

3. Composant selon la revendication 2, **caractérisé en ce que** la couche définissant la zone d'interaction acousto-optique est en In_{0,63} Ga_{0,36} As_{0,78} P_{0,22} et **en ce que** la ou les couches transparentes (2, 3) de guide(s) d'onde optique sont en In_{0,73} Ga_{0,27} As_{0,6} P_{0,4} la longueur d'onde de fonctionnement étant de 1,55 µm.

4. Composant selon la revendication 1, **caractérisé en ce que** le substrat est un substrat d'InP et **en ce que** les différentes couches (2 - 6) sont en des matériaux de la famille GaInAlAs, dont les compositions et/ou épaisseurs sont choisies de façon à conférer à ces différentes zones les propriétés correspondantes à leur fonction respective tout en étant en accord de maille sur le substrat.

5. Composant selon la revendication 4, **caractérisé en ce que** la couche définissant la zone d'interaction acousto-optique est en In_{0,53}Ga_{0,37}Al_{0,1}As, là où les couches de guide d'onde transparentes sont en en In_{0,53}Ga_{0,27}Al_{0,2}As et la longueur d'onde de fonctionnement est de 1,55 µm.

6. Composant selon la revendication 1, **caractérisé en ce que** le substrat est en un composé Cd₁₋ₓZnₓTe, et **en ce que** les différentes couches (2 - 6) sont en des composés Hg_{1-y}Cd_{y}Te, dont les compositions et épaisseurs sont choisies de façon à conférer à ces différentes zones les propriétés correspondantes à leur fonction respective tout en étant en accord de maille sur le substrat.

7. Composant selon la revendication 6, **caractérisé en ce que** le substrat est en Cd_{0,96}Zn_{0,4}Te, la couche définissant la zone d'interaction acousto-optique est en Hg_{0,32}Cd_{0,68}Te, les couches de guide d'onde transparentes sont en Hg_{0,90}Cd_{0,10}Te et la longueur d'onde de fonctionnement est de l'ordre de 1,55 µm.

8. Composant selon l'une des revendications précédentes, **caractérisé en ce que** la dimension de la couche d'interaction (4) dans la direction de guidage de la lumière est choisie entre 20 et 500 µm.

9. Composant selon l'une des revendications précédentes, **caractérisé en ce qu'**il intègre en outre monolithiquement d'autres fonctions, par exemple au moins un laser ou plusieurs lasers de longueurs d'onde différentes.

10. Composant selon la revendication 9 prise en combinaison avec la revendication 7, **caractérisé en ce qu'**il intègre des barrettes de canaux d'entrée (5) et de canaux de sortie (6) et **en ce que** des guides d'onde planaires (2, 3) de part et d'autre de la zone d'interaction acousto-optique (4) intègrent des lentilles convergentes (9, 10).

## Patentansprüche

1. Akusto-optische Wellenleiter-Komponente, auf einem gleichen Substrat (1) umfassend:
- mindestens eine optische Wellenleiter-Schicht (2, 3), die bei einer Arbeits-Wellenlänge der Komponente transparent ist;
- eine Schicht (4), die auf dem Substrat (1) einen Bereich akusto-optischer Wechselwirkung definiert, wobei die Zusammensetzung dieser Schicht in der Weise gewählt ist, dass die optische Absorption für die Arbeits-Wellenlänge zwischen 10 und 300 cm⁻¹ liegt;
wobei die Schichten (2, 3, 4) koplanar und in der Weise auf dem Substrat angeordnet sind, dass die optische Welle innerhalb der Ebene der Schichten (2, 3, 4) geleitet wird,
wobei die Schichten (2, 3, 4) in einem Bereich des Substrats durch selektive Epitaxie aufgebracht sind.

2. Komponente nach Anspruch 1, **dadurch gekennzeichnet, dass** das Substrat ein InP-Substrat ist, und dass die verschiedenen Schichten (2-6) von der Zusammensetzung Ga₁₋ₓInₓAs_{y}P_{1-y} sind, wobei die Werte von x und y und/oder die Dicken in der Weise gewählt sind, um den verschiedenen Bereichen die Eigenschaften zu übertragen, die ihrer jeweiligen Funktion entsprechen, wobei alle dem Gitter des Substrats entsprechen.

3. Komponente nach Anspruch 2, **dadurch gekennzeichnet, dass** die Schicht, die den Bereich akusto-optischer Wechselwirkung definiert, aus In_{0,63}Ga_{0,36}As_{0,78}P_{0,22} gebildet ist, und dass die transparente Wellenleiterschicht oder die transparenten Wellenleiterschichten (2, 3) aus In_{0,73}Ga_{0,27}As_{0,6}P_{0,4} gebildet ist/sind, wobei die Arbeitswellenlänge 1,55 µm beträgt.

4. Komponente nach Anspruch 1, **dadurch gekennzeichnet, dass** das Substrat ein InP-Substrat ist, und dass die verschiedenen Schichten (2-6) aus GaInAlAs gebildet sind, wobei die Zusammensetzungen und/oder die Dicken in der Weise gewählt sind, um den verschiedenen Bereichen die Eigenschaften zu übertragen, die ihrer jeweiligen Funktion entsprechen, wobei alle dem Gitter des Substrats entsprechen.

5. Komponente nach Anspruch 4, **dadurch gekennzeichnet, dass** die Schicht, die den Bereich akusto-optischer Wechselwirkung definiert, aus In_{0,53}Ga_{0,37}Al_{0,1}As gebildet ist, und dass die transparente Wellenleiterschicht oder die transparenten Wellenleiterschichten aus In_{0,53}Ga_{0,27}Al_{0,2}As gebildet ist/sind, wobei die Arbeitswellenlänge 1,55 µm beträgt.

6. Komponente nach Anspruch 1, **dadurch gekennzeichnet, dass** das Substrat aus einer Zusammensetzung aus Cd₁₋ₓZnₓTe gebildet ist, und dass die verschiedenen Schichten (2-6) aus Hg_{1-y}Cd_{y}Te zusammengesetzt sind, wobei die Zusammensetzungen und/oder die Dicken in der Weise gewählt sind, um den verschiedenen Bereichen die Eigenschaften zu übertragen, die ihrer jeweiligen Funktion entsprechen, wobei alle dem Gitter des Substrats entsprechen.

7. Komponente nach Anspruch 6, **dadurch gekennzeichnet, dass** das Substrat aus einer Zusammensetzung aus Cd_{0,96}Zn_{0,4}Te gebildet ist, die Schicht, die den Bereich akusto-optischer Wechselwirkung definiert, aus Hg_{0,32}Cd_{0,68}Te gebildet ist, die transparenten Wellenleiterschichten aus Hg_{0,90}Cd_{0,10}Te bestehen und die Arbeitswellenlänge etwa 1,55 µm beträgt.

8. Komponente nach einem der vorhergehenden Ansprüche, **dadurch gekennzeichnet, dass** die Abmessung des Wechselwirkungsbereichs (4) in der Leitrichtung des Lichts zwischen 20 und 500 µm gewählt ist.

9. Komponente nach einem der vorhergehenden Ansprüche, **dadurch gekennzeichnet, dass** sie darüber hinaus in monolithischer Weise andere Funktionen einschließt, zum Beispiel mindestens einen Laser oder mehrere Laser mit verschiedenen Wellenlängen.

10. Komponente nach Anspruch 9 in Verbindung mit Anspruch 7, **dadurch gekennzeichnet, dass** sie Leitungen von Eintrittskanälen (5) und Leitungen von Ausgangskanälen (6) einschließt, und dass planare Wellenleiter (2, 3) auf beiden Seiten des Bereichs akusto-optischer Wechselwirkung (4) Konvergenzlinsen (9, 10) einschließen.

## Claims

1. Guided-optical-wave acoustooptic component comprising, on one and the same substrate (1):
- at least one optical waveguide layer (2, 3) transparent at an operating wavelength of the component; and
- a layer (4) that defines an acoustooptic interaction region on the said substrate (1), the composition of the said layer being chosen so that the optical absorption, at the operating wavelength, is between 10 and 300 cm⁻¹,
the said layers (2, 3, 4) being coplanar and placed on the substrate in such a way that the optical wave is guided in the plane of the layers (2, 3, 4) and
the said layers (2, 3, 4) being deposited on a region of this substrate by selective epitaxy.

2. Component according to Claim 1, **characterized in that** the substrate is an InP substrate and **in that** the various layers (2-6) are made of Ga₁₋ₓInₓAs_{y}P_{1-y} compounds, the values of x and y and/or the thicknesses of which are chosen so as to give these various regions the properties that correspond to their respective functions, while maintaining lattice matching with the substrate.

3. Component according to Claim 2, **characterized in that** the layer defining the acoustooptic interaction region is made of In_{0.63}Ga_{0.36}As_{0.78}P_{0.22} and **in that** the transparent optical waveguide layer or layers (2, 3) are made of In_{0.73}Ga_{0.27}As_{0.6}P_{0.4}, the operating wavelength being 1.55 µm.

4. Component according to Claim 1, **characterized in that** the substrate is an InP substrate and **in that** the various layers (2-6) are made of materials from the GaInAlAs family, the compositions and/or thicknesses of which are chosen so as to confer on these various regions the properties that correspond to their respective functions, while maintaining lattice matching with the substrate.

5. Component according to Claim 4, **characterized in that** the layer defining the acoustooptic interaction region is made of In_{0.53}Ga_{0.37}Al_{0.1}As, the transparent waveguide layer or layers are made of In_{0.53}Ga_{0.27}Al_{0.2}As and the operating wavelength is 1.55 µm.

6. Component according to Claim 1, **characterized in that** the substrate is made of a Cd₁₋ₓZnₓTe compound and **in that** the various layers (2-6) are made of Hg_{1-y}Cd_{y}Te compounds, the compositions and thicknesses of which are chosen so as to confer on these various regions the properties corresponding to their respective functions, while maintaining lattice matching with the substrate.

7. Component according to Claim 6, **characterized in that** the substrate is made of Cd_{0.96}Zn_{0.4}Te, the layer defining the acoustooptic interaction region is made of Hg_{0.32}Cd_{0.68}Te, the transparent waveguide layers are made of Hg_{0.90}Cd_{0.10}Te and the operating wavelength is around 1.55 µm.

8. Component according to one of the preceding claims, **characterized in that** the length of the interaction layer (4) in the light-guiding direction is chosen to be between 20 and 500 µm.

9. Component according to one of the preceding claims, **characterized in that** it furthermore monolithically integrates other functions, for example at least one laser or several lasers with different wavelengths.

10. Component according to Claim 9 taken in combination with Claim 7, **characterized in that** it integrates input channel (5) and output channel (6) strips and **in that** planar waveguides (2, 3) on either side of the acoustooptic interaction region (4) integrate convergent lenses (9, 10).
